# EUROPÄISCHE PATENTSCHRIFT

(11) **EP 2 180 226 B1**
(45) Veröffentlichungstag und Bekanntmachung des Hinweises auf die Patenterteilung: **20.06.2012**
(21) Anmeldenummer: 08167674.4
(22) Anmeldetag: 27.10.2008
(51) Int. Cl.: F16L 41/03

(54) **Modulares Fluidverteilsystem**
Modular fluid distribution system
Système de distribution de fluide modulaire

(43) Veröffentlichungstag der Anmeldung: 28.04.2010
(73) Patentinhaber: Hans E. Winkelmann GmbH, 63322 Rödermark (DE)
(72) Erfinder: Frohnheiser, Helmut, 63179 Obertshausen (DE)
(74) Vertreter: Schickedanz, Willi

(56) Entgegenhaltungen:
- EP-A- 1 878 958
- US-A1- 2006 230 755

## Beschreibung

Die Erfindung betrifft ein modulares Fluidverteilsystem nach den Merkmalen des Patentanspruchs 1.

In der Industrie werden viele Prozesse bei erhöhter Temperatur durchgeführt, oder es entstehen während eines Prozesses hohe Temperaturen. Daher ist es wünschenswert, diese Temperaturen nicht nur mittels eines Überwachungssystems zu überwachen, sondern auch die Temperatur zu kontrollieren und zu regulieren. Diese Regulierung erfolgt häufig durch Kühlung des Prozesses mittels eines Kühlmittels von außen. Bedeutsam ist dabei die Versorgung der Produktionsanlagen mit dem entsprechenden Kühlmittel.

Umgekehrt kann es aber auch wichtig sein, eine Anlage mit einem Heizmedium zu versorgen. Auch hier ist es wichtig, die Versorgung der Anlage mit dem Heizmedium effektiv zu gestalten.

Es ist ein modulares Rohrsystem bekannt, das Module und Nebenmodule aufweist, die je ein Endgerät mit einer relativ konstanten Wasserdurchflussmenge bei einer modulierten Versorgungswassertemperatur versorgen (DE 101 06 531 A1). Dieses Rohrsystem findet in Heißwasserverteilungssystemen Verwendung.

Bekannt ist ferner ein modulares Steuersystem für strömende Medien mit mehreren anreihbaren Verteilermodulen, die jeweils aus einem quaderförmigen Modulblock gebildet sind, wobei die Modulblöcke im Wesentlichen die gleiche Form und die gleichen Abmessungen haben und jeweils Kanäle für den Zu- und Abfluss strömender Medien sowie mindestens zwei einander gegenüberliegende Anschlussflächen mit Anschluss-öffnungen aufweisen, die jeweils durch die Mündungsöffnung eines an der jeweiligen Anschlussfläche austretenden Kanals gebildet sind (EP 1 158 180 A1).

Weiterhin ist eine Ventilanordnung für ein Verteilersystem für Gase bekannt, die eine Anschlussplatte mit einander entgegengesetzt orientierten Bestückungsflächen aufweist (EP 1 878 958 A1). Die Anschlussplatte ist mit zwei Ventilreihen an Mehrwegeventilen ausgestattet, deren Antriebsköpfe an den Bestückungsflächen montiert sind und die mit Steuerabschnitten in die Anschlussplatte hineinragen. Die Steuerabschnitte der beiden Ventilreihen verlaufen in zueinander parallelen Ventilreihenebenen, wobei außerdem in der Richtung der Plattenhauptachse ein Versatz zwischen den Mehrwegeventilen der beiden Ventilreihen vorliegt.

Des Weiteren ist ein modulares Fluidverteilsystem bekannt, welches mehrere Modulblöcke aufweist, die auf einer Substratplatte angeordnet werden können (US 2006/0005891 A1). Zusammen mit Anschlussmodulen bilden diese Module einen Verteilerblock für ein Fluid. Dieser Verteilerblock weist einen Ausgang sowie einen Eingang für ein Fluid auf.

Ferner ist ein Verteiler für Temperierfluide in Temperiersystemen für Spritzgussmaschinen bekannt. Dieser Verteiler weist ein Gehäuse auf, das von einem Vorlauf- und einem Rücklaufkanal durchlaufen wird, und mit jeweils einer von dem Vorlauf- und dem Rücklaufkanal abgehenden Zweigleitung zur Verbindung mit einem Temperierkanal eines Werkzeugs, von denen wenigstens eine Zweigleitung mit einem Durchflussreglerventil versehen ist, und wobei in einer der Zweigleitungen ein Durchflussmesser vorgesehen ist (DE 203 04 841 U1). In einer der Zweigleitungen ist dabei ein Temperatursensor vorgesehen.

Schließlich ist ein modular aufgebautes Rohrverteilersystem bekannt, das aus mehreren Modulen besteht (US 2006/0065317 A1). Durch Aneinanderfügen dieser Module kann die Länge des Rohrverteilersystems variiert werden.

Aufgabe der vorliegenden Erfindung ist es, ein modulares Fluidverteilsystem bereitzustellen, das sehr kompakt ist und eine hohe Leistungsdichte aufweist.

Diese Aufgabe wird durch die Merkmale des Anspruchs 1 gelöst.

Die Erfindung betrifft somit ein modulares Verteilersystem für ein Fluid. Dieses Fluidverteilsystem weist mehrere Funktionsmodule auf, die zwischen einem Grundmodul und einem Endmodul angeordnet sind. Das Grundmodul weist ein Vorlaufventil und ein Rücklaufventil für das Fluid sowie eine Druckluftleitung für das Ausblasen der Funktionsmodule und eine Drainageleitung auf.

Vorteilhaft bei diesem modularen Fluidverteilsystem ist, dass es sehr kompakt ist und deshalb nicht viel Platz beansprucht. Ferner weist das Fluidverteilsystem eine hohe Leistungsdichte auf. Dadurch, dass jederzeit weitere Funktionsmodule zwischen dem Grundmodul und dem Endmodul eingebaut werden können, ist dieses Fluidverteilsystem sehr einfach erweiterbar. Vorzugsweise sind das Endmodul, das Grundmodul sowie die Funktionsmodule standardisiert, was die Erweiterung des Fluidverteilsystems sehr einfach gestaltet. Auch die Wartung des Systems gestaltet sich dadurch einfach. Das Fluidverteilsystem kann dabei vormontiert sein oder direkt vor Ort aufgebaut werden. Vorteilhaft ist dabei, dass die Steuerung und Überwachung des Prozesses direkt im Fluidverteilsystem integriert sind. Ein weiterer Vorteil besteht darin, dass durch dieses Fluidverteilsystem sehr wenige Dichtstellen vorhanden sind.

Ein Ausführungsbeispiel wird anhand von Figuren erläutert und im Folgenden näher beschrieben. Es zeigen:
Figur 1 eine perspektivische Ansicht eines modularen Fluidverteilsystems;
Figur 2 eine weitere Ansicht des Fluidverteilsystems gemäß Figur 1;
Figur 3 einen Schnitt durch die Ebene I-I des in Figur 1 dargestellten Fluidverteilsystems;
Figur 4 das Fluidverteilsystem gemäß Figur 1 mit Blickrichtung A;
Figur 5 das Fluidverteilsystem gemäß Figur 1 mit Blickrichtung B;
Figur 6 einen Schaltplan des in den Figuren 1 bis 5 dargestellten Fluidverteilsystems.

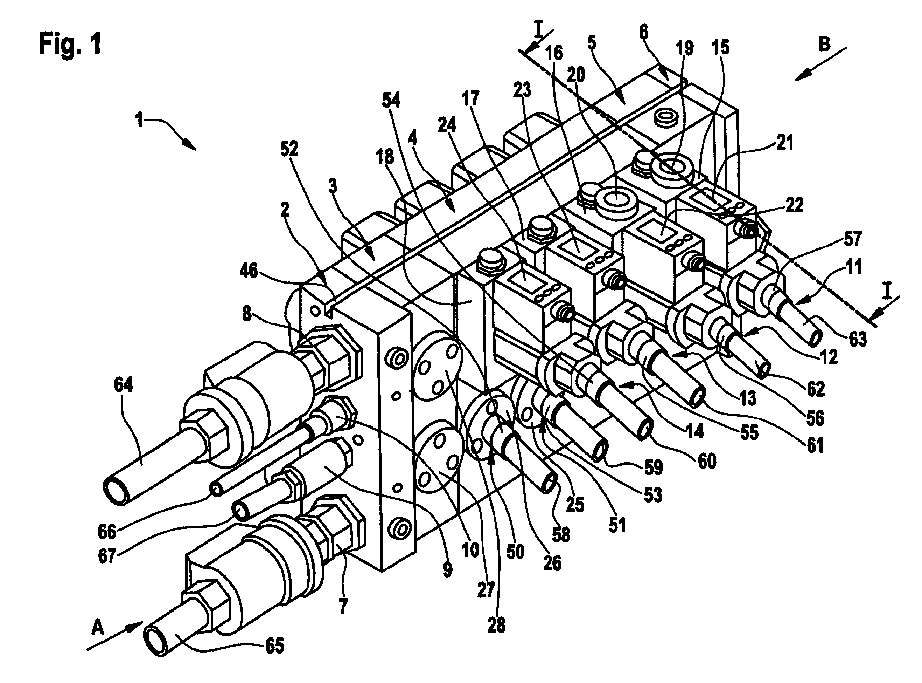

Figur 1 zeigt ein modulares Fluidverteilsystem 1, dass ein Grundmodul 2 mit daran angeordneten Funktionsmodulen 3 bis 5 aufweist. Diese Funktionsmodule 3 bis 5 sind zwischen dem Grundmodul 2 und einem Endmodul 6 angeordnet. Bei diesem Endmodul 6 kann es sich um eine Endplatte, wie dies in Figur 1 dargestellt ist, oder um ein Einspeisungsmodul handeln. Wird ein Einspeisungsmodul anstelle der Endplatte 6 an dem Fluidverteilsystem 1 angeordnet, so kann ein zusätzliches Medium eingespeist werden. Bei diesem Medium kann es sich z. B. um Warmwasser zur Temperierung des Fluidverteilsystems 1 handeln. Das Grundmodul 2, die Funktionsmodule 3 bis 5 sowie das Endmodul 6 haben vorzugsweise standardisierte Größe.

Die Funktionsmodule 3 bis 5 sind mit dem Grundmodul 2 über mindestens zwei Zugstangen verbunden. Vorzugsweise weist das Fluidverteilsystem 1 jedoch drei Zugstangen auf, die parallel im Fluidverteilsystem 1 oder entlang des Fluidverteilsystems 1 angeordnet sind und von dem Grundmodul 2 in Richtung des Endmoduls 6 verlaufen. In dem in Figur 1 dargestellten Fluidverteilsystem 1 verlaufen die Zugstangen durch das Fluidverteilsystem 1 hindurch, das heißt von dem Grundmodul 2 in Richtung des Endmoduls 6. Da die Zugstangen innerhalb der Funktionsmodule 3 bis 5 angeordnet sind, sind sie in Figur 1 nicht zu erkennen. Das Grundmodul 2 wird somit, wie auch die Funktionsmodule 3 bis 5, auf die Zugstangen aufgesteckt. Die Zugstangen werden dann mit dem Grundmodul 2 und dem Endmodul 6 fest verbunden.

Ferner ist in Figur 1 eine Einkerbung 46 zu erkennen. An der der Einkerbung 46 gegenüberliegenden Seite ist eine weitere Einkerbung angeordnet, die jedoch in Figur 1 nicht zu erkennen ist. Diese Einkerbungen dienen zur Fixierung des Fluidverteilsystems 1 an Montagegestellen oder Maschinengestellen, die in Figur 1 jedoch nicht dargestellt sind.

An dem Grundmodul 2 sind ein Vorlaufventil 7 sowie ein Rücklaufventil 8 für ein Fluid, z. B. Wasser, angeordnet. Vorlaufventil 7 und Rücklaufventil 8 sind in Figur 1 als Axial-Ventile ausgebildet. An dem Vorlaufventil 7 und dem Rücklaufventil 8 ist jeweils eine Rohrleitung 64, 65 angeordnet. Anstelle einer Rohrleitung kann jedoch auch ein Schlauch an dem Vorlaufventil 7 und dem Rücklaufventil 8 angeordnet werden. Zu erkennen sind auch eine Drainageleitung 9 sowie eine Druckluftleitung 10 für das Ausblasen der Funktionsmodule, die ebenfalls an dem Grundmodul 2 angeordnet sind. An diese Drainageleitung 9 beziehungsweise Druckluftleitung 10 ist jeweils eine Leitung 66, 67 angeordnet. Bei dieser Leitung 66, 67 kann es sich beispielsweise um einen Schlauch handeln. In die. Druckluftleitung 10 kann somit bei Bedarf Luft eingebracht werden. Direkt an dem Grundmodul 2 ist das Funktionsmodul 3 angeordnet. In diesem Funktionsmodul 3 ist eine Vorrichtung angeordnet, mit der das Ausblasen von Fluiden (beispielsweise von Kühlwasser) aus dem Fluidverteilsystem 1 gesteuert werden kann. Eine solche Vorrichtung zum Steuern des Ausblasens ist in Figur 1 jedoch nicht zu erkennen.

An dem am Funktionsmodul 3 angeordneten Funktionsmodul 4 sind mehrere Rücklaufleitungen 11 bis 14 angeordnet. Zu erkennen sind auch Blindflansche 27 und 28 sowie Gewindeflansche 25 und 26. Mit den Blindflanschen 27 und 28 können nicht benötigte Vor- und Rücklaufleitungen abgedichtet werden. Die Gewindeflansche 25 und 26 dienen zum Anschluss an Vorlaufleitungen 50, 51. Über die Rücklaufleitungen 11 bis 14 sowie die Vorlaufleitungen 50, 51 kann eine Anlage mit dem Fluid versorgt werden. Bei dem Fluid handelt es sich um ein Fluid zum Kühlen beziehungsweise zum Heizen, vorzugsweise Wasser. Dazu werden an den Rücklaufleitungen 11 bis 14 beziehungsweise Vorlaufleitungen 50, 51 entsprechende Verbindungsstücke 52 bis 57 angeordnet, an denen Leitungen, zum Beispiel Schläuche, angebracht werden, die das Fluidverteilsystem 1 mit der Anlage verbinden. In Figur 1 sind die Leitungen als Schläuche 58 bis 63 ausgebildet.

So kann es sich bei dieser Anlage z. B. um eine Beschichtungsanlage handeln, die mittels des Fluids gekühlt wird. Zu erkennen sind auch Drosselblöcke 15 bis 18, die jeweils an dem Funktionsmodul 4 angeordnet sind. Die Drosselblöcke 15 und 16 besitzen dabei einen integrierten Messanschluss 21 bis 24. An den beiden Drosselblöcken 15 und 16 sind Temperatursensoren 19 und 20 angeordnet. Bei diesen Temperatursensoren 19 und 20 kann es sich beispielsweise um Thermometer handeln. Mit diesen Temperatursensoren 19 und 20 kann die Temperatur des Fluids gemessen werden. An den Drosselblöcken 15 bis 18 sind ferner Durchflussmesser 21 bis 24 angeordnet, mit denen die Durchflussmenge des Fluids gemessen werden kann. Des Weiteren sind an den Funktionsmodulen 3 bis 5 die Blindflansche 27 und 28 sowie die Gewindeflansche 25 und 26 angeordnet. An denen Gewindeflanschen 25, 26 sind die Vorlaufleitungen 50, 51 angeordnet. Das Fluidverteilsystem 1 kann entsprechend den Anforderungen mit weiteren Bauteilen, wie zum Beispiel mit Ventilinseln, Busknoten, Signaleingangsmodulen zur Prozessüberwachung sowie Kabeln, versehen werden. Diese Bauteile sind jedoch in Figur 1 der Übersicht halber ebenfalls nicht dargestellt.

Beim Zusammenbau des in Figur 1 dargestellten Fluidverteilsystems 1 werden die Zugstangen zuerst an dem Grundmodul 2 angebracht. Anschließend werden die Funktionsmodule 2 bis 5 auf die Zugstangen aufgesteckt. Schließlich wird das Endmodul 6 an den Zugstangen angebracht und mit diesen fest verbunden.

Das in Figur 1 dargestellte Fluidverteilsystem 1 kann ferner jederzeit durch das Anbringen weiterer Funktionsmodule erweitert werden. Dies erfolgt dadurch, dass das Endmodul 5 abmontiert wird und an die bereits vorhandenen Zugstangen Erweiterungszugstangen angebracht werden. Die Erweiterungszugstangen werden dabei vorzugsweise in das Innengewinde der Zugstangen angeordnet. Auf diese Erweiterungszugstangen können weitere Funktionsmodule aufgesteckt werden. Anschließend wird auf den Erweiterungszugstangen das Endmodul 6 angebracht. Für einen Fachmann ist klar, dass er durch die Verwendung von Zugstangen unterschiedlicher Länge auch die Größe der Fluidverteilsysteme variieren kann. Vorteilhaft ist dabei, dass auch bei einem sehr großen Fluidverteilsystem kaum ein Druckabfall in dem Vorlauf und dem Rücklauf zu verzeichnen ist.

Das Endmodul 6, das eine Endplatte oder ein Einspeisungsmodul sein kann, das Grundmodul 2, die Zugstangen sowie die Blindflansche 27 und 28 sowie Gewindeflansche 25 und 26 bestehen vorzugsweise aus Edelstahl. Die Funktionsmodule bestehen hingegen aus Kunststoff, vorzugsweise aus Polyoximethylen (POM). Da die Funktionsmodule aus einem Kunststoff bestehen, weisen diese ein niedriges Gewicht auf, womit auch das Fluidverteilsystem 1 ein sehr niedriges Gewicht aufweist.

Das Funktionsmodul 5 stellt die einfachste Ausführung eines Funktionsmoduls dar. Dieses Funktionsmodul 5 weist dabei lediglich ein Vorlaufventil 37, die Hauptkanäle für den Vor- und Rücklauf sowie für das Ausblasen und die Drainage auf. Diese Hauptkanäle sind jedoch in Figur 1 nicht zu sehen. Das Funktionsmodul 5 ist somit die kostengünstigste Variante eines Funktionsmoduls.

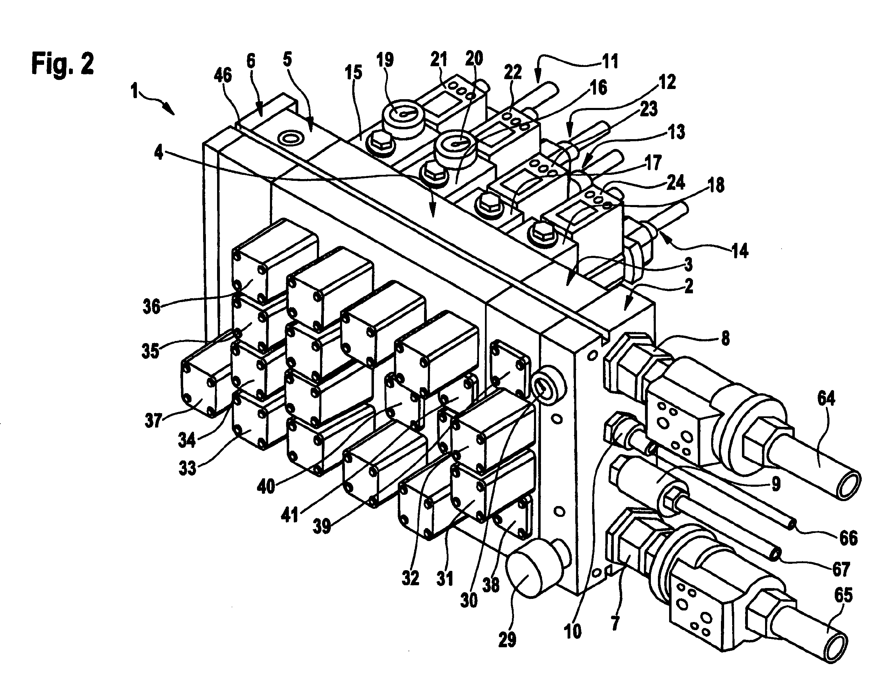

In Figur 2 ist eine weitere Ansicht des in Figur 1 dargestellten Fluidverteilsystems 1 gezeigt, mit dem eine Anlage mit einem Fluid, z. B. Reinwasser (DI-Wasser) oder Kühlwasser, versorgt werden kann. Zu erkennen ist wiederum das Grundmodul 2 mit den daran angeordneten Funktionsmodulen 3 bis 5 sowie dem Endmodul 6. An dem Grundmodul 2 sind das Vorlaufventil 7 sowie das Rücklaufventil 8 für das Fluid angeordnet. Die Drainageleitung 9 sowie die Druckluftleitung 10 für das Ausblasen der Funktionsmodule sind ebenfalls zu erkennen. An dem Grundmodul 2 sind zudem ein Manometer 29 sowie ein Temperatursensor 30, beispielsweise ein Thermometer, angeordnet. Mit dem Manometer 29 kann der Druck im Vorlaufhauptkanal und mit dem Temperatursensor 30 die Temperatur im Rücklaufhauptkanal gemessen werden. Da der Vorlaufhauptkanal und Rücklaufhauptkanal durch das Fluidverteilsystem verlaufen, sind diese Kanäle in Figur 1 nicht zu sehen.

Wie in Figur 2 dargestellt, weist das Funktionsmodul 3 zwei Ventile 31 und 32 auf. Dabei kann mit dem Ventil 31 die Drainage und mit dem Ventil 32 das Ausblasen mit Druckluft gesteuert werden. An dem Funktionsmodul 4 sind mehrere Ventile 33 bis 36 angeordnet. Dabei kann mit dem Ventil 34 die Drainage und mit dem Ventil 35 das Ausblasen mit Druckluft gesteuert werden. Mit dem Ventil 33 kann hingegen der Fluidstrom im Vorlauf und mit dem Ventil 36 der Fluidstrom im Rücklauf zu- oder abgeschaltet werden. Auch das Funktionsmodul 5 weist ein Ventil 37 auf, mit dem der Fluidstrom im Vorlauf geschaltet werden kann. Vorzugsweise handelt es sich bei diesen Ventilen 31 bis 37 um 2/2-Wege-Sitzventile. Diese Ventile können pneumatisch oder auch per Hand betätigt werden.

Wie in Figur 2 zu erkennen, sind nicht alle möglichen Stellen der Funktionsmodule 3 und 4 mit Ventilen besetzt. So weist nämlich das Funktionsmodul 3 lediglich zwei Ventile 31 und 32 auf. Die Stellen, die nicht besetzt sind, sind mit Blindplatten 38 und 39 versehen. Auch das Funktionsmodul 4 weist mehrere Blindplatten auf. In Figur 2 sind jedoch nur die Blindplatten 40 und 41 deutlich zu erkennen. Mit diesem Blindplatten 38 bis 41 werden somit die nicht benötigten Ventilplätze verschlossen. Bei diesem Fluidverteilsystem 1 kann deshalb die Anzahl der Ventile frei gewählt werden. Damit stellt dieses Fluidverteilsystem 1 ein sehr flexibles System dar, dessen Einsatzgebiet sehr groß ist.

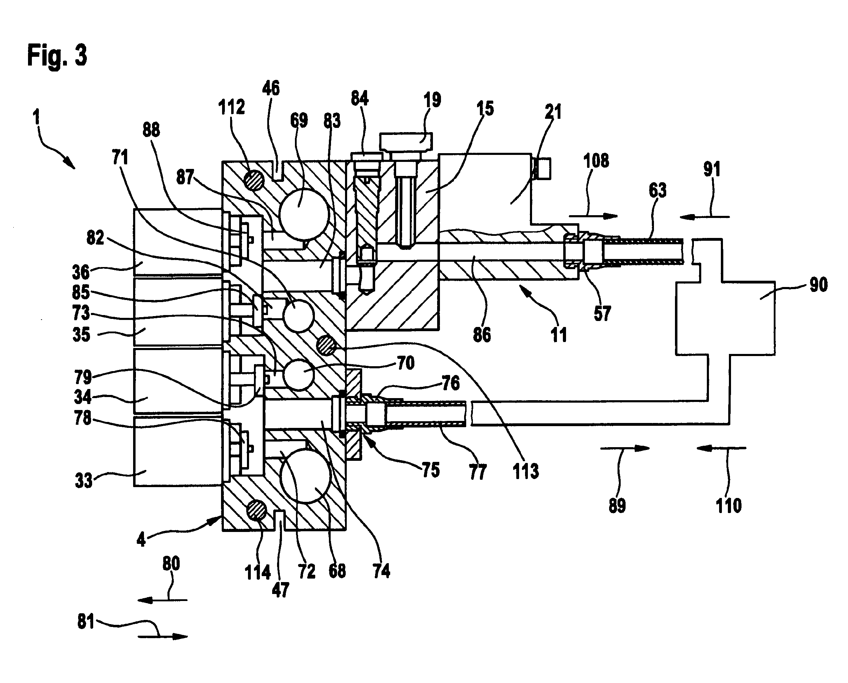

Figur 3 zeigt einen Schnitt durch die Ebene I-I des in Figur 1 dargestellten Fluidverteilsystems 1. An dem Funktionsmodul 4 sind die Ventile 33 bis 36 sowie der Drosselblock 15 angeordnet. An diesen Drosselblock 15 schließt sich der Durchflussmesser 21 an.

Durch das Funktionsmodul 4 verlaufen ein Vorlaufhauptkanal 68 sowie ein Rücklaufhauptkanal 69. Zwischen dem Vorlaufhauptkanal 68 und dem Rücklaufhauptkanal 69 sind ein Hauptkanal 70 für die Drainage sowie ein Hauptkanal 71 für das Ausblasen vorgesehen. Der Vorlaufhauptkanal 68, der Rücklaufhauptkanal 69, der Hauptkanal 70 für die Drainage sowie der Hauptkanal 71 für das Ausblasen verlaufen dabei parallel zueinander durch das gesamte Fluidverteilsystem 1, das heißt durch das Grundmodul 2 bis hin zum Endmodul 6. Das Grundmodul 2, die Funktionsmodule 3 und 4 sowie das Endmodul 6 sind in Figur 3 nicht zu sehen. Von dem Hauptkanal 70 für die Drainage sowie von dem Vorlaufhauptkanal 68 führt eine Nebenleitung 72 beziehungsweise 73 zu einer Leitung 74. Diese Leitung 74 ist Teil einer Vorlaufleitung 75, die durch ein an dem Funktionsmodul 4 angeordnetes Verbindungsstück 76 verläuft. An diesem Verbindungsstück 76 ist eine weitere Leitung 77 angeordnet, wobei es sich bei dieser Leitung 77 beispielsweise um einen Schlauch handelt.

In der den Vorlaufhauptkanal 68 mit der Leitung 74 verbindenden Nebenleitung 72 ist ein Ventilelement 78 des Ventils 33 angeordnet. Auch das Ventil 34 weist ein Ventilelement 79 auf. Dieses Ventilelement 79 ist in der Nebenleitung 73 angeordnet, die den Hauptkanal 70 mit der Leitung 74 verbindet. Diese Ventilelemente 78, 79 können in Richtung der Pfeile 80 beziehungsweise 81 bewegt werden. In Figur 3 ist zu erkennen, dass sich das Ventil 33 durch die Position des Ventilelements 78 in einer offenen Stellung befindet, da die Nebenleitung 72 offen ist. Damit kann das Fluid von dem Vorlaufhauptkanal 68 in den Kanal 74 und somit in die Vorlaufleitung 75 gelangen. Wird hingegen das Ventilelement 78 in Richtung des Pfeils 81, das heißt in Richtung Vorlaufhauptkanals 68 bewegt, so verschließt das Ventilelement 78 den Zugang des Vorlaufhauptkanals 68 zu der Leitung 74. Das in dem Vorlaufhauptkanal 68 befindliche Fluid kann somit nicht mehr in die Leitung 74 und damit auch nicht mehr in die Vorlaufleitung 75 gelangen.

Das Ventil 34 ist durch die Position des Ventilelements 79 hingegen in einer geschlossenen Position, da das Ventilelement 79 die Nebenleitung 73 verschließt. Das in dem Kanal 74 befindliche Fluid kann somit nicht in den Hauptkanal 70 für die Drainage gelangen. Wird das Ventilelement 79 in Richtung des Pfeils 80 bewegt, so wird die Nebenleitung 73 geöffnet.

Der Hauptkanal 71 für das Ausblasen ist über eine Nebenleitung 82 mit einer Leitung 83 verbunden. In der Nebenleitung 82 ist ein Ventilelement 85 des Ventils 35 angeordnet. Das Ventil 35 ist durch die Stellung des Ventilelements 85 in einer geschlossenen Position. Die Leitung 83 führt über eine Leitung 86 zu der an dem Verbindungsstück 57 angeordneten Leitung 63. Bei der Leitung 63 kann es sich um einen Schlauch handeln. Die Leitung 86 bildet dabei einen Teil der Rücklaufleitung 11. Zwischen der Leitung 83 und der Leitung 86 ist ein Drosselventil 84 angeordnet. Das Drosselventil 84 wird entsprechend der erforderlichen Fluidmenge (beispielsweise die Menge an Kühlmittel) von Hand verstellt. Der aktuelle Durchflusswert wird am Durchflussmesser 21 angezeigt. Mit diesem Drosselventil 84 kann die Menge an Fluid, die über die Rücklaufleitung 11 in den Rücklaufhauptkanal 69 geführt wird, eingestellt werden. In dem Drosselblock 15 ist ferner der Temperatursensor 19 angeordnet, mit dem die Temperatur in der Rücklaufleitung 11 gemessen werden kann. Zu erkennen ist, dass der Rücklaufhauptkanal 69 ebenfalls eine Nebenleitung 87 aufweist. Über diese Nebenleitung 87 ist der Rücklaufhauptkanal 69 mit der Leitung 83 verbunden. Das Ventil 36 ist durch die Stellung eines zwischen dem Rücklaufhauptkanal 69 und der Leitung 83 angeordneten Ventilelements 88 in einer offenen Position. Damit kann das über die Rücklaufleitung 11 kommende Fluid in den Rücklaufhauptkanal 69 gelangen.

Da die Ventile 33 und 36 offen sind, gelangt das vom Vorlaufhauptkanal 68 kommende Fluid über die Vorlaufleitung 75 in die Leitung 77. Das Fluid wird dabei in Richtung des Pfeils 89 zu einer Anlage 90, z. B. einer Beschichtungsanlage, geführt. Handelt es sich bei dem Fluid um ein Kühlmittel, so kann damit der Prozess in der Anlage 90 gekühlt werden. Von dieser Anlage 90 wird das Fluid in Richtung des Pfeils 91 über den Schlauch 63 in die Rücklaufleitung 11 bewegt. Von dieser Rücklaufleitung 11 gelangt das Fluid schließlich in den Rücklaufhauptkanal 69. Durch das Drosselventil 84 kann die Menge an Fluid, die von der Anlage 90 kommt, eingestellt werden. Werden nun die Ventile 33 und 36 durch Bewegung der Ventilelemente 78 und 88 in Richtung des Pfeils 81 geschlossen, so wird das Fluid in der Anlage 90 gehalten. Es können dann die Ventilelemente 79, 85 der Ventile 34 und 35 in Richtung des Pfeils 80 bewegt werden, wodurch die Ventile 34 und 35 geöffnet werden. Es kann sodann über den Hauptkanal 71 für das Ausblasen Luft durch die Rücklaufleitung 11 in Richtung des Pfeils 108 geblasen werden. Die Luft wird somit auch durch die Anlage 90 geführt und wird in Richtung des Pfeils 110 zum Hauptkanal 70 für Drainage bewegt, womit das Fluid aus der Anlage 90 entfernt wird. Anschließend können die Ventile 34 und 35 wieder geschlossen werden. Die Schläuche 63 und 77 können von der Anlage 90 abgetrennt werden und bei Bedarf an eine andere Anlage angeschlossen werden. Soll der neu angeschlossenen Anlage ein Fluid zugeführt werden, so können die Ventile 33 und 36 wieder geöffnet werden. Es ist aber auch möglich, dieser Anlage kein Fluid zuzuführen. In diesem Fall bleiben die Ventile 33 und 36 geschlossen.

In Figur 3 sind ferner sind drei Zugstangen 112, 113, 114 zu erkennen, die durch das Funktionsmodul 4 verlaufen. Über diese Zugstangen 112, 113, 114 werden die einzelnen Funktionsmodulen 3 bis 5 mit dem Endmodul 6 sowie dem Grundmodul 2 verbunden.

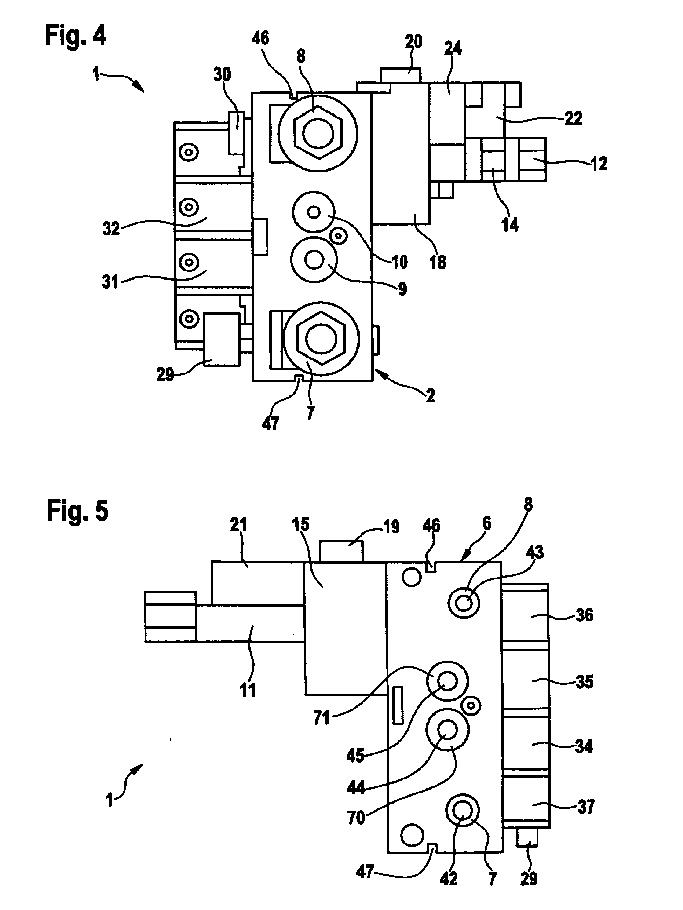

In Figur 4 ist das Fluidverteilsystem 1 gemäß Figur 1 mit Blickrichtung A gezeigt. Zu erkennen sind wiederum das Vorlaufventil 7, das Rücklaufventil 8, die Drainageleitung 9 sowie die Druckluftleitung 10, die an dem Grundmodul 2 angeordnet sind. Das Manometer 29 sowie der Temperatursensor 30 des Grundmoduls 2 sowie die beiden Ventile 31 und 32 des Funktionsmoduls 3 sind ebenfalls zu erkennen. Das Funktionsmodul 3 selbst ist jedoch nicht zu erkennen. An dem Grundmodul 2 ist die Einkerbung 46 angebracht, die gegenüber einer weiteren Einkerbung 47 angeordnet ist. Über diese Einkerbungen 46, 47 kann das Fluidverteilsystem 1 in einem Montagerahmen oder einem Maschinengestell fixiert werden. Ein Montagerahmen oder ein Maschinengestell sind in Figur 4 nicht dargestellt. Zu sehen sind jedoch die Leitungen 14 und 12, die an dem in Figur 4 nicht zu sehenden Funktionsmodul 4 angeordnet sind.

Figur 5 zeigt das Fluidverteilsystem 1 gemäß Figur 1 mit Blick in Richtung B. Deutlich zu erkennen ist das Endmodul 6, das vier Öffnungen 42 bis 45 aufweist. Diese Öffnungen 42 bis 45 können bei Bedarf mittels Gewindestopfen verschlossen werden. Gewindestopfen sind jedoch in Figur 5 nicht dargestellt. Bei der Öffnung 43 handelt es sich um die Öffnung für den Rücklaufhauptkanal 69 und bei der Öffnung 42 um die Öffnung für den Vorlaufhauptkanal 68. Die Öffnung 44 ist dem Hauptkanal 70 für die Drainage zuzuordnen. Die Öffnung 45 dient als Öffnung für den Hauptkanal 71 für das Ausblasen.

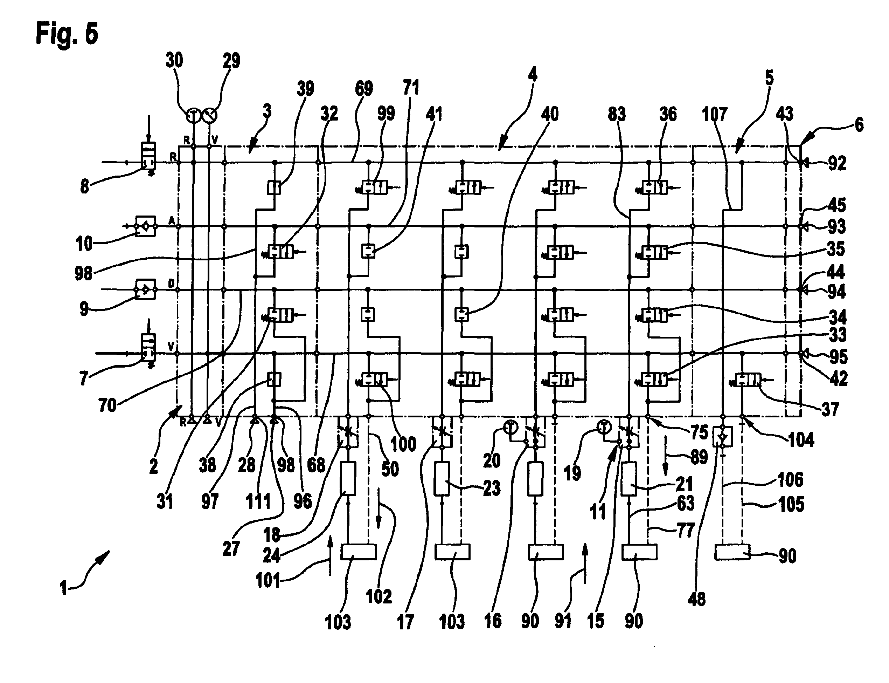

Figur 6 zeigt einen Schaltplan des in den Figuren 1 bis 5 dargestellten modularen Fluidverteilsystems 1. Das Fluidverteilsystem 1 besteht aus dem Grundmodul 2, den Funktionsmodulen 3 bis 5 sowie dem Endmodul 6. An dem Grundmodul 2 sind das Vorlaufventil 7, das Rücklaufventil 8, die Drainageleitung 9 sowie die Druckluftleitung 10 angeordnet. An dem Grundmodul 2 sind ferner der Temperatursensor 30 sowie das Manometer 29 angeordnet. Mit dem Temperatursensor 30 kann die Temperatur des Fluids in dem Rücklaufhauptkanal 69 gemessen werden. Das Manometer 29 dient zum Messen des Drucks des Fluids im Vorlaufhauptkanal 68. Der Rücklaufhauptkanal 69 sowie der Vorlaufhauptkanal 68 verlaufen durch das gesamte modulare Fluidverteilsystem 1. Auch der Hauptkanal 70 für die Drainage sowie der Hauptkanal 71 für das Ausblasen verlaufen durch das gesamte Fluidverteilsystem 1. Die am Endmodul 6 angeordneten Öffnungen 43 bis 45 sind durch Gewindestopfen 92 bis 95 verschlossen. An dem Funktionsmodul 3 sind die beiden Ventile 31, 32 zu erkennen. Dabei ist das Ventil 31 zwischen dem Hauptkanal 70 für Drainage und einer Vorlaufleitung 96 angeordnet. Diese Vorlaufleitung 96 verbindet den Vorlaufhauptkanal 68 mit einem Ausgang 98, der allerdings durch einen Blindflansch 27 verschlossen ist. Das Ventil 32 ist zwischen dem auf Hauptkanal 71 für das Ausblasen und einer Rücklaufleitung 97 angeordnet. Auch die Rücklaufleitung 97 weist einen Ausgang 111 auf, der jedoch durch den Blindflansch 28 verschlossen ist. Die Ventile 31, 32 sind dabei geschlossen, wodurch das Fluid durch den Vorlaufhauptkanal 68 sowie den Rücklaufhauptkanal 69 strömen kann. An dem Funktionsmodul 4 sind ferner zwei Ventile 99, 100 angeordnet. Sind diese Ventile 99, 100 offen, kann das Fluid aus dem Vorlaufhauptkanal 68 über die Vorlaufleitung 50 in Richtung des Pfeils 102 zu einer Anlage 103 geführt werden. Nachdem das Fluid durch die Anlage 103 gelaufen ist, verlässt es die Anlage 103 und bewegt sich in Richtung des Pfeils 101, das heißt in Richtung des Drosselblocks 18. Nachdem es den Drosselblock 18 passiert hat, gelangt das Fluid in den Rücklaufhauptkanal 69, über den das Fluid das modulare Fluidverteilsystem 1 wieder verlassen kann.

Zu erkennen sind ferner die Ventile 33 bis 36, die an dem Funktionsmodul 4 angeordnet sind. Diese Ventile 33 bis 36 sind geschlossen. Werden die Ventile 33 und 36 geöffnet, kann das Fluid aus dem Vorlaufhauptkanal 68 über die Vorlaufleitung 75 in den Schlauch 77 gelangen, der das modulare Fluidverteilsystem 1 mit der Anlage 90 verbindet. Nachdem das Fluid die Anlage 90 passiert hat, gelangt es über den Schlauch 63 in den Drosselblock 15. Von dort aus strömt das Fluid über die Leitung 83 in den Rücklaufhauptkanal 69.

An dem Funktionsmodul 4 ist das Funktionsmodul 5 angeordnet. Bei diesem Funktionsmodul 5 handelt es sich um die einfachste Ausführung eines Funktionsmoduls. Dieses Funktionsmodul 5 weist lediglich ein Ventil 37 auf, dass zwischen dem Vorlaufhauptkanal 68 und einer Vorlaufleitung 104 angeordnet ist. An der Vorlaufleitung 104 ist ein Schlauch 105 angebracht, der das Funktionsmodul 5 mit der Anlage 90 verbindet. Das Ventil 37 hat hier die Funktion eines einfachen Absperrventils. Wird das Ventil 37 geöffnet, so kann das Fluid den Vorlaufhauptkanal 68 verlassen und über den Schlauch 105 in die Anlage 90 gelangen. Anschließend verlässt das Fluid die Anlage 90 über einen Schlauch 106, der die Anlage 90 mit Funktionsmodul 5 verbindet. Über eine in dem Funktionsmodul 5 angeordnete Leitung 107 gelangte Fluid in den Rücklaufhauptkanal 69. Über diesen Rücklaufhauptkanal 69 kann das Fluid das modulare Fluidverteilsystem 1 verlassen. Zu erkennen ist auch ein Rückschlagventil 48, das zwischen dem Schlauch 106 und der Leitung 107 angeordnet ist.

Vorteilhaft bei diesem Fluidverteilsystem 1 ist, dass es an verschiedene Anlagen 90, 103 angebracht werden kann, womit es möglich ist, ein Fluid mit nur einem System für verschiedene Anlagen bereitzustellen. Handelt es sich bei dem Fluid beispielsweise um ein Kühlmittel, so ist es möglich, in verschiedenen Anlagen verschiedene Prozesse zu kühlen. Soll die Kühlung für einen Prozess unterbrochen werden, so geschieht dies durch Umschalten der Ventile des Fluidverteilsystems 1. Die Kühlung kann somit unterbrochen werden, ohne dass das System komplett umgebaut werden muss. Dadurch kann das Fluidverteilsystem flexibel eingesetzt werden, womit Zeit und Kosten eingespart werden können. Wird ein Anschluss nicht mehr benötigt, so können an die Ausgänge einfach Blindflansche, wie dies z.B. in Figur 6 bei dem Funktionsmodul 3 der Fall ist, angeordnet werden. Dadurch kann ein Anschluss stillgelegt werden. Vorteilhaft ist dabei, dass das Fluidverteilsystem 1 jederzeit erweitert werden kann, indem weitere Funktionsmodule zwischen dem Grundmodul 2 und dem Endmodul 6 angeordnet werden. Dadurch, dass das Fluidverteilsystem 1 sehr kompakt ist, erfolgt so gut wie kein Druckabfall innerhalb des Systems, womit das Fluid gleichmäßig durch das Fluidverteilsystem 1 sowie durch die an dem Fluidverteilsystem 1 angeschlossenen Anlagen strömt. Das Fluidverteilsystem 1 kann somit separat, das heißt zentral, angeordnet sein oder aber ein Teil einer Anlage sein.

Vorteilhaft ist jedoch das Fluidverteilsystem 1 zentral angeordnet, weil dadurch gleich mehrere Anlagen an dieses Fluidverteilsystem 1 angeschlossen werden können. Mit diesem Fluidverteilsystem 1 kann aber auch eine Vorwärmung des in der Anlage stattfindenden Prozesses erfolgen, indem ein Fluid mit erhöhter Temperatur bereitgestellt wird. Da das Fluidverteilsystem 1 aus Kunststoff und Stahl besteht, kann es auch für Reinwasser (DI-Wasser) verwendet werden, da diese Materialien chemisch recht resistent sind.

Vorzugsweise ist dieses Fluidverteilsystem 1 in einem Rahmen angeordnet und ist bereits vor dem Anschließen an eine Anlage vormontiert und bereits geprüft worden. Dies führt zu einer erheblichen Reduzierung der Montagezeiten beim Einbau in Produktionsanlagen, wie zum Beispiel in eine Sputteranlage. Durch den modularen Aufbau gestaltet sich auch die Wartung einfach, wodurch nicht nur Zeit, sondern auch Kosten gespart werden können. Wird das Fluidverteilsystem 1 mit einer Anlage verbunden, so spielt es keine Rolle, wie das Fluidverteilsystem 1 ausgerichtet ist.

## Patentansprüche

1. Modulares Fluidverteilsystem (1) für flüssige Medien mit
einem Grundmodul (2), das
ein Vorlaufventil (7) und ein Rücklaufventil (8) für ein Fluid sowie
eine Druckluftleitung (10) und eine Drainageleitung (9) aufweist,
einem Endmodul (6) sowie
mindestens einem zwischen dem Endmodul (6) und dem Grundmodul (2) angeordneten Funktionsmodul (3 - 5).

2. Modulares Fluidverteilsystem (1) nach Anspruch 1, **dadurch gekennzeichnet, dass** das Grundmodul (2) mit dem Endmodul (6) und den daran angeordneten Funktionsmodulen (3 - 5) über mindestens zwei Zugstangen (112 -114) verbunden ist.

3. Modulares Fluidverteilsystem (1) nach Anspruch 1, **dadurch gekennzeichnet, dass** durch das Fluidverteilsystem (1) ein Vorlaufhauptkanal (68) sowie ein Rücklaufhauptkanal (69) verlaufen.

4. Modulares Fluidverteilsystem (1) nach Anspruch 1, **dadurch gekennzeichnet, dass** die Funktionsmodule (3 - 5) zumindest ein Ventil (33 - 36) aufweisen.

5. Modulares Fluidverteilsystem (1) nach Anspruch 1, **dadurch gekennzeichnet, dass** in dem Funktionsmodul (3) eine Vorrichtung zum Steuern der Ausblasluft vorgesehen ist.

6. Modulares Fluidverteilsystem (1) nach Anspruch 1, **dadurch gekennzeichnet, dass** an dem Funktionsmodul (4) Drosselblöcke (15 - 18) angeordnet sind.

7. Modulares Fluidverteilsystem (1) nach Anspruch 6, **dadurch gekennzeichnet, dass** an den Drosselblöcken (15, 16) ein Messanschluss (21, 22) angeordnet ist.

8. Modulares Fluidverteilsystem (1) nach Anspruch 6, **dadurch gekennzeichnet, dass** die Drosselblöcke (15, 16) Temperatursensoren (19, 20) aufweisen.

9. Modulares Fluidverteilsystem (1) nach Anspruch 1, **dadurch gekennzeichnet, dass** das Funktionsmodul (4) Blindflansche (27, 28) aufweist, mit denen nicht benötigte Vorlaufleitungen (96) und Rücklaufleitungen (97) abgedichtet werden können.

10. Modulares Fluidverteilsystem (1) nach Anspruch 1, **dadurch gekennzeichnet, dass** das Funktionsmodul (4) Gewindeflansche (25, 26) aufweist.

11. Modulares Fluidverteilsystem (1) nach Anspruch 1, **dadurch gekennzeichnet, dass** die Funktionsmodule (3 - 5) aus Kunststoff bestehen.

12. Modulares Fluidverteilsystem (1) nach Anspruch 1, **dadurch gekennzeichnet, dass** das Endmodul (6), das Grundmodul (2), die Blindflansche (27, 28), die Gewindeflansche (25, 26) sowie die Zugstangen (112 - 114) aus Edelstahl bestehen.

13. Modulares Fluidverteilsystem (1) nach Anspruch 11, **dadurch gekennzeichnet, dass** der Kunststoff Polyoximethylen ist.

14. Modulares Fluidverteilsystem (1) nach Anspruch 3, **dadurch gekennzeichnet, dass** der Vorlaufhauptkanal (68) über mindestens eine Leitung (74) mit einem Hauptkanal (70) für Drainage verbunden ist.

15. Modulares Fluidverteilsystem (1) nach Anspruch 3, **dadurch gekennzeichnet, dass** der Rücklaufhauptkanal (69) über mindestens eine Leitung (83) mit einem Hauptkanal (71) für das Ausblasen verbunden ist.

16. Modulares Fluidverteilsystem (1) nach den Ansprüchen 1 bis 14, **dadurch gekennzeichnet, dass** zwischen dem Vorlaufhauptkanal (68) und der Leitung (74) das Ventil (33) angeordnet ist.

17. Modulares Fluidverteilsystem (1) nach den Ansprüchen 1 bis 14, **dadurch gekennzeichnet, dass** zwischen dem Hauptkanal (70) für Drainage und der Leitung (74) das Ventil (34) angeordnet ist.

18. Modulares Fluidverteilsystem (1) nach den Ansprüchen 1 bis 15, **dadurch gekennzeichnet, dass** zwischen dem Rücklaufhauptkanal (69) und der Leitung (83) das Ventil (36) angeordnet ist.

19. Modulares Fluidverteilsystem (1) nach den Ansprüchen 1 bis 15, **dadurch gekennzeichnet, dass** zwischen dem Hauptkanal (71) für das Ausblasen und der Leitung (83) das Ventil (35) angeordnet ist.

20. Modulares Fluidverteilsystem (1) nach Anspruch 3, **dadurch gekennzeichnet, dass** an dem Grundmodul (2) ein Manometer (29), mit dem der Druck des Fluids in einem Vorlaufhauptkanal (68) gemessen werden kann, sowie ein Temperatursensor (30), mit dem Temperaturen des Fluids in einem Rücklaufhauptkanal (69) gemessen werden können, vorgesehen ist.

## Claims

1. A modular fluid distribution system (1) for liquid media, comprising
a base module (2) having
a feed valve (7) and a return valve (8) for a fluid, as well as
a compressed-air line (10) and a drainage line (9),
an end module (6), and
at least one function module (3 - 5) arranged between said end module (6) and said base module (2).

2. The modular fluid distribution system (1) as claimed in claim 1, **characterised in that** the base module (2) is connected to the end module (6) and to the function modules (3 - 5) mounted thereon by at least two drawbars (112 - 114).

3. The modular fluid distribution system (1) as claimed in claim 1, **characterised in that** the fluid distribution system (1) is traversed by a main feed channel (68) and a main return channel (69).

4. The modular fluid distribution system (1) as claimed in claim 1, **characterised in that** the function modules (3 - 5) have at least one valve (33 - 36), respectively.

5. The modular fluid distribution system (1) as claimed in claim 1, **characterised in that** an apparatus for regulating the blow-off air is provided in the function module (3).

6. The modular fluid distribution system (1) as claimed in claim 1, **characterised in that** throttle blocks (15 - 18) are arranged on the function module (4).

7. The modular fluid distribution system (1) as claimed in claim 6, **characterised in that** the throttle blocks (15, 16) are provided with measurement connections (21, 22), respectively.

8. The modular fluid distribution system (1) as claimed in claim 6, **characterised in that** the throttle blocks (15, 16) have temperature sensors (19, 20), respectively.

9. The modular fluid distribution system (1) as claimed in claim 1, **characterised in that** the function module (4) has blind flanges (27, 28) by means of which unused feed lines (96) and return lines (97) may be sealed off.

10. The modular fluid distribution system (1) as claimed in claim 1, **characterised in that** the function module (4) has threaded flanges (25, 26).

11. The modular fluid distribution system (1) as claimed in claim 1, **characterised in that** the function modules (3 - 5) are made from plastic material.

12. The modular fluid distribution system (1) as claimed in claim 1, **characterised in that** the end module (6), the base module (2), the blind flanges (27, 28), the threaded flanges (25, 26), and the drawbars (112 - 114) are made from stainless steel.

13. The modular fluid distribution system (1) as claimed in claim 11, **characterised in that** the plastic material is polyoxymethylene.

14. The modular fluid distribution system (1) as claimed in claim 3, **characterised in that** the main feed channel (68) is connected to a main drainage channel (70) by means of at least one line (74).

15. The modular fluid distribution system (1) as claimed in claim 3, **characterised in that** the main return channel (69) is connected to a main blow-off channel (71) by means of at least one line (83).

16. The modular fluid distribution system (1) as claimed in claims 1 to 14, **characterised in that** the valve (33) is arranged between the main feed channel (68) and the line (74).

17. The modular fluid distribution system (1) as claimed in claims 1 to 14, **characterised in that** the valve (34) is arranged between the main drainage channel (70) and the line (74).

18. The modular fluid distribution system (1) as claimed in claims 1 to 15, **characterised in that** the valve (36) is arranged between the main return channel (69) and the line (83).

19. The modular fluid distribution system (1) as claimed in claims 1 to 15, **characterised in that** the valve (35) is arranged between the main blow-off channel (71) and the line (83).

20. The modular fluid distribution system (1) as claimed in claim 3, **characterised in that** the base module (2) is provided with a pressure gauge (29) permitting to measure the fluid pressure in a main feed channel (68) and with a temperature sensor (30) permitting to measure fluid temperatures in a main return channel (69).

## Revendications

1. Système de distribution de fluide modulaire (1) pour des substances liquides comprenant
un module de base (2) qui présente
une soupape d'amenée (7) et une soupape de retour (8) pour un fluide ainsi qu'
une conduite d'air comprimé (10) et une conduite de drainage (9),
un module terminal (6) ainsi qu'
au moins un module fonctionnel (3 - 5) disposé entre le module terminal (6) et le module de base (2).

2. Système de distribution de fluide modulaire (1) selon la revendication 1, **caractérisé en ce que** le module de base (2) est relié par au moins deux tiges de traction (112 - 114) au module terminal (6) et aux modules fonctionnels (3 - 5) disposés sur celui-ci.

3. Système de distribution de fluide modulaire (1) selon la revendication 1, **caractérisé en ce qu'**un canal d'amenée principal (68) ainsi qu'un canal de retour principal (69) s'étendent à travers le système de distribution de fluide (1).

4. Système de distribution de fluide modulaire (1) selon la revendication 1, **caractérisé en ce que** les modules fonctionnels (3 - 5) présentent au moins une soupape (33 - 36).

5. Système de distribution de fluide modulaire (1) selon la revendication 1, **caractérisé en ce qu'**un dispositif destiné à commander l'air expulsé est prévu dans le module fonctionnel (3).

6. Système de distribution de fluide modulaire (1) selon la revendication 1, **caractérisé en ce que** des blocs d'étranglement (15 - 18) sont disposés sur le module fonctionnel (4).

7. Système de distribution de fluide modulaire (1) selon la revendication 6, **caractérisé en ce qu'**une connexion de mesure (21, 22) est disposée sur les blocs d'étranglement (15, 16).

8. Système de distribution de fluide modulaire (1) selon la revendication 6, **caractérisé en ce que** les blocs d'étranglement (15, 16) présentent des capteurs de température (19, 20).

9. Système de distribution de fluide modulaire (1) selon la revendication 1, **caractérisé en ce que** le module fonctionnel (4) présente des brides aveugles (27, 28) à l'aide desquelles il est possible d'obturer des conduites d'amenée (96) et des conduites de retour (97) non utilisées.

10. Système de distribution de fluide modulaire (1) selon la revendication 1, **caractérisé en ce que** le module fonctionnel (4) présente des brides filetées (25, 26).

11. Système de distribution de fluide modulaire (1) selon la revendication 1, **caractérisé en ce que** les modules fonctionnels (3 - 5) sont en matière plastique.

12. Système de distribution de fluide modulaire (1) selon la revendication 1, **caractérisé en ce que** le module terminal (6), le module de base (2), les brides aveugles (27, 28), les brides filetées (25, 26) ainsi que les tiges de traction (112 - 114) sont en acier spécial.

13. Système de distribution de fluide modulaire (1) selon la revendication 11, **caractérisé en ce que** la matière plastique est du polyoxyméthylène.

14. Système de distribution de fluide modulaire (1) selon la revendication 3, **caractérisé en ce que** le canal d'amenée principal (68) est relié par au moins une conduite (74) à un canal principal (70) destiné au drainage.

15. Système de distribution de fluide modulaire (1) selon la revendication 3, **caractérisé en ce que** le canal de retour principal (69) est relié par au moins une conduite (83) à un canal principal (71) destiné à l'expulsion d'air.

16. Système de distribution de fluide modulaire (1) selon les revendications 1 à 14, **caractérisé en ce que** la soupape (33) est disposée entre le canal d'amenée principal (68) et la conduite (74).

17. Système de distribution de fluide modulaire (1) selon les revendications 1 à 14, **caractérisé en ce que** la soupape (34) est disposée entre le canal principal (70) destiné au drainage et la conduite (74).

18. Système de distribution de fluide modulaire (1) selon les revendications 1 à 15, **caractérisé en ce que** la soupape (36) est disposée entre le canal de retour principal (69) et la conduite (83).

19. Système de distribution de fluide modulaire (1) selon les revendications 1 à 15, **caractérisé en ce que** la soupape (35) est disposée entre le canal principal (71) destiné à l'expulsion d'air et la conduite (83).

20. Système de distribution de fluide modulaire (1) selon la revendication 3, **caractérisé en ce que** sur le module de base (2) sont prévus un manomètre (29) à l'aide duquel il est possible de mesurer la pression du fluide dans un canal d'amenée principal (68) ainsi qu'un capteur de température (30) à l'aide duquel il est possible de mesurer des températures du fluide dans un canal de retour principal (69).
